**Europäisches Patentamt**

**European Patent Office**

**Office européen des brevets**

(19)

(11) Veröffentlichungsnummer : **0 048 869
B1**

(12)  **EUROPÄISCHE PATENTSCHRIFT**

(45) Veröffentlichungstag der Patentschrift :
27.07.88

(51) Int. Cl.⁴ : **G 06 F 15/16, G 06 F 13/00**

(21) Anmeldenummer : **81107161.2**

(22) Anmeldetag : **10.09.81**

(54) Mehrrechnersystem, insbesondere mit einer Vielzahl von Mikrorechnern.

(30) Priorität : **30.09.80 DE 3036911**

(43) Veröffentlichungstag der Anmeldung :
**07.04.82 Patentblatt 82/14**

(45) Bekanntmachung des Hinweises auf die Patenterteilung : **27.07.88 Patentblatt 88/30**

(84) Benannte Vertragsstaaten :
**BE FR GB IT NL SE**

(56) Entgegenhaltungen :
DE-A- 2 027 181
DE-A- 2 644 188
DE-A- 2 713 304
DE-A- 2 805 705
US-A- 3 449 722
US-A- 3 530 438
US-A- 3 753 234
SIEMENS ZEITSCHRIFT, Band 44, Nr. 5, Mai 1970, Seiten 282-286, Erlangen, DE. A. HÖRDER et al.: "Datenaustauschsteurung des Siemens-Systems 300"
NACHRICHTENTECHNIK ELEKTRONIK, Band 30, Nr. 4, 1980, Seiten 141-143, Ost-Berlin, DD. W. SCHÖNE et al.: "Schnelle Koppeleinheit für Mikrorechner K1520"
ELEKTRONIK, Band 20, 1979, Seiten 73-77, München, DE. H. BELLM et al.: "Ein Multi-Mikrocomputersystem am Arbeitsplatz"

(73) Patentinhaber : **Siemens Aktiengesellschaft Berlin
und München
Wittelsbacherplatz 2
D-8000 München 2 (DE)**

(72) Erfinder : **Sauer, Anton, Dipl.-Ing.
Tristanstrasse 14
D-8034 Germering (DE)**
Erfinder : **Thinschmidt, Hans, Ing. grad.
Kreuzlingerstrasse 52 C
D-8034 Germering (DE)**

## Beschreibung

Die vorliegende Erfindung bezieht sich auf ein Mehrrechnersystem, insbesondere mit einer Vielzahl von Mikrorechnern, bei dem ein alle Rechner verbindendes Busleitungssystem vorgesehen ist und das eine zentrale, an dieses Busleitungssystem angeschlossene Einheit hat, mittels derer alle Rechner betreffende Funktionen ausgeführt werden können, wobei die zentrale Einheit als Betriebsrechner fungiert, welcher Betriebsrechner neben der zentralen Funktion einer Wartung bzw. Diagnose des gesamten Mehrrechnersystems auch eine zentrale Funktion erfüllt, die die Steuerung einer Kommunikation zwischen der rechnern, nämlich Arbeitsrechnern, betrifft, und wobei der Betriebsrechner zur Durchführung der Kommunikation eine Liste führt, die der Betriebsrechner unter anderem auch dazu verwendet, eine von einem Rechner nicht lösbare Aufgabe einem anderen Rechner zu übertragen.

In Mehrrechnersystemen treten verschiedene Problemkreise auf, deren Ursache im Verbundbetrieb der Systemkomponenten liegt. Die einzelnen Probleme betreffen die Kommunikation, den Betrieb, die Diagnose und Wartung eines Mehrrechnersystems.

Innerhalb des Problemkreises Kommunikation sind folgende Punkte zu beachten :

— Abwicklung des Verbindungsaufbaues zwischen den Rechnern

— Steuerung des Datenaustausches zwischen den Rechnern

— Durchführung der beiden Funktionen mit optimaler Geschwindigkeit ohne Zwischenspeicherung

— Sichere Abwicklung des Verkehrs durch quittungsgesteuerten Datenaustausch

— Gleichzeitiger Datenaustausch zwischen minimal zwei Rechnern und maximal allen Rechnern des Systems.

Zur Steuerung des Betriebsablaufes eines Mehrrechnersystems gehören :

— Auswahl des Zielrechners nach der gewünschten Funktion

— Zwischenspeicherung von Nachrichten bei belegtem Zielrechner

— Auftragsverwaltung

— Warteschlangenverwaltung

— Dynamische Änderung von Prioritäten und Aktivitäten in den einzelnen Rechnern abhängig vom Betriebsablauf

— Führen und Auswerten von Statistiken bezüglich des Betriebsablaufes.

Da Mehrrechnersysteme hardwareredundant sind, kann in der Regel auch weitergearbeitet werden, wenn Einzelkomponenten ausfallen. Dazu ist eine Diagnose des Systemzustandes während des Betriebs nötig. Im Fehlerfall muß dann eine Ersatzschaltung durchgeführt werden. Im Wartungszustand muß ein definierter Zugang zum System möglich sein, um gezielt Wartungsmaßnahmen zu starten.

Durch die Übernahme dieser zentral abzuwickelnden Problemkreise durch ein zentrales Glied, den Betriebs-Rechner, werden die anderen Rechner des Verbundes entlastet und eine optimale Gesamtkoordination gewährleistet.

Alle genannten Funktionen (Kommunikation, Betrieb, Diagnose und Wartung) können ausschließlich durch Hardware und Firmware abgewickelt werden, wenn der Betriebs-Rechner mikroprogrammiert (Firmware) ist. Durch zusätzliche Realisierung von Steuerabläufen mit Software kann der Betriebs-Rechner dann dynamisch an die jeweiligen Betriebsgegebenheiten des Verbundes angepaßt werden.

Die angesprochenen Probleme wurden bisher durch für jeden Einzelfall zugeschnittene Verfahren und Realisierungen gelöst. Die Steuerung der Kommunikation erfolgt dort z. B. über common memory, vergl. beispielsweise Niisson, S. A. « M3R — Ein modulares Mehrrechnersystem mit Restverfügbarkeit und Prozeßsicherungsstruktur », Elektronische Rechenanlagen 20 (1978) 3, S. 115-123 oder Swan, R. J., Fuller, S. H., Sieworek, D. P. : « Cm* — A Modular Multimicroprocessor », AFIPS Conf. Proc. Vol. 46, NCC (1977), S. 637-644, über Zeitschlitze in einem synchronen Bussystem vergl. beispielsweise Arkat, S. u. a. : « Teilnehmerstation in einem dienstintegrierten digitalen Nachrichtennetz », Nachrichtentechnische Zeitschrift 32 (1979) 8, S. 560-565 oder über Busarbiter vergl. beispielsweise Barthmaier, J. : « Intel Multibus Interfacing », Intel-Application Note AP-28 A, 1979. Ein eigenes System vergl. beispielsweise Bretschneider, G. u. a. : « Mehrbenutzer-Mehrprozessorsystem », DT-OS 2 644 188 oder Bellm, H. und Thinschmidt, H. : « Ein Multi-Mikrocomputersystem am Arbeitsplatz » (Teil 2 : Busstrukturen für Mehrrechnersysteme), Elektronik 28 (1979) 20, S. 73-77 erfüllt auch bereits Funktionen der Betriebsablaufsteuerung, wobei allerdings Kommunikations- und Betriebsfunktion Einschränkungen unterliegen. Für Diagnose- und Wartung ist in Mehrrechnersystemen meist ein eigener Rechner vorgesehen.

Aus der DE-A-2 027 181 und der US-A-3 530 438 ist jeweils bereits bekannt, daß ein Betriebsrechner die Steuerung einer Kommunikation zwischen zwei anderen Rechnern vornimmt bzw. daß Listen zur Aufgabenverteilung geführt werden.

Der vorliegenden Erfindung liegt die Aufgabe zugrunde, ein Mehrrechnersystem zu schaffen, bei dem ein Betriebsrechner derart ausgebildet und mit dem Busleitungssystem des eigentlichen Mehrrechnersystems zusammengeschaltet ist, daß sowohl die Diagnose und Wartung als auch die Betriebssteuerung und die Kommunikation zwischen den Einzelrechnern optimal durchgeführt werden können, wobei ein verhältnismäßig einfacher und übersichtlicher Systemaufbau erhalten bleiben soll. Der Betriebsrechner soll außerdem in der Lage sein, Aufgaben optimal auf die einzelnen Rechner zu verteilen, Änderungen in der Prioritätsrangfolge im Interesse eines geringstmöglichen Verarbeitungsaufwandes und im Interesse der Dringlichkeit von Vorgängen vorzunehmen und ggf. nicht zeitrichtig absetzbare Daten im Interesse einer Entlastung der Einzelrechner in seinem eigenen Speicher zwischenzuspeichern.

Weitere Aufgaben gehen aus der im folgenden gegebenen Beschreibung hervor.

Die der Erfindung zugrundeliegende Aufgabe wird durch ein Mehrrechnersystem, insbesondere mit einer Vielzahl von Mikrorechnern, der eingangs genannten Art und gemäß dem Oberbegriff des Patentanspruchs 1 gelöst, das erfindungsgemäß dadurch gekennzeichnet ist, daß das Busleitungssystem außer der an sich für ein derartiges Busleitungssystem bekannten Adreßleitung, einer Datenleitung und einer Bussteuerleitung weitere Leitungen, nämlich eine Transfersteuerleitung, über die die jeweilige Betriebsbereitschaft eines als Senderechner arbeitenden Arbeitsrechners und eines als Empfangsrechners arbeitenden Arbeitsrechners gleichzeitig abgefragt wird, eine Adreßgebersteuerleitung, die dafür vorgesehen ist, ein Umschalt-Signal beim Laden eines Adreßgebers innerhalb des Arbeitsrechners zu diesem Arbeitsrechner zu übertragen, und eine Zugriffssignalleitung hat, über die Zugriffssignale zum Zwecke eines freizügigen Zugriffs zu dem Speicher eines beliebigen Arbeitsrechners übertragen werden, daß die Rechner jeweils ein Kommunikationsfeld haben, in dem u. a. eine Angabe darüber enthalten ist, wie lang ein zu transferierendes Datenfeld ist, daß die ·Liste Information darüber enthält, welche Aufgabe oder welche Aufgaben von welchen Rechnern oder welchen Arbeitsrechnern gelöst werden kann bzw. können, und daß in der Liste Information enthalten ist, die Auskunft über den jeweiligen Frei-/Besetztzustand jedes der Arbeitsrechner gibt.

Die Erfindung bietet den Vorteil, daß ein Mehrrechnersystem zur Verfügung steht, das Diagnose, Wartung, Betriebssteuerung und Kommunikation zwischen den Einzelrechnern bei gleichzeitig besonders einfachem und übersichtlichem Systemaufbau optimal durchführen kann.

Vorteilhafte Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren im einzelnen erläutert.

Fig. 1 zeigt ein Blockschaltbild eines bevorzugten Ausführungsbeispiels für das erfindungsgemäße Mehrrechnersystem MRS mit einem Betriebsrechner BR, mehreren Arbeitsrechnern $AR_0 ... AR_{15}$ und einem alle Rechner miteinander verbindenden Busleitungssystem BS.

Fig. 2 zeigt ein Flußdiagramm für ein bevorzugtes Ausführungsbeispiel für einen Datentransfer zwischen zwei Rechnern.

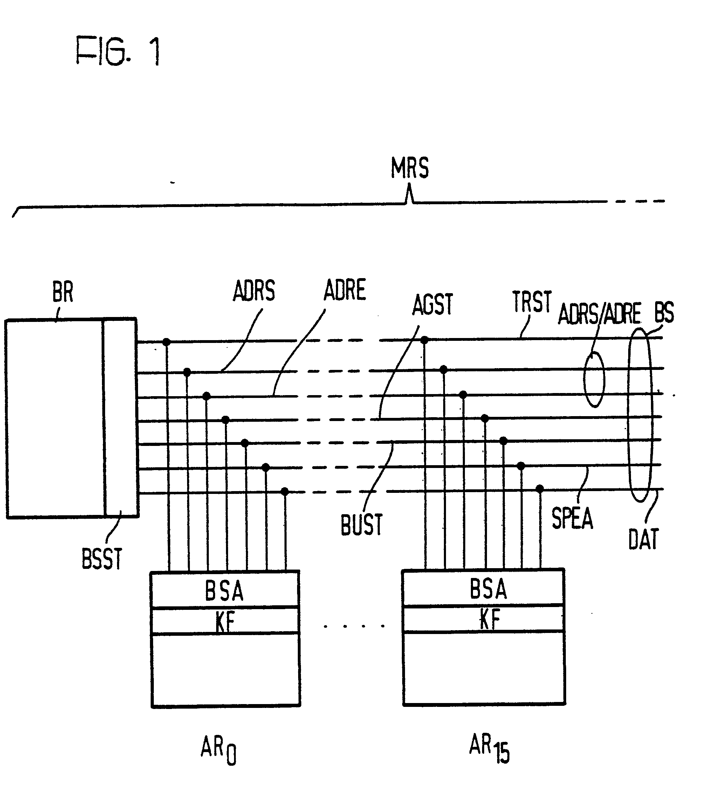

Wie erläutert, zeigt Fig. 1 für ein bevorzugtes Ausführungsbeispiel für die Erfindung ein Blockschaltbild der wesentlichen Komponenten des Mehrrechnersystems MRS. Die einzelnen Rechner des Mehrrechnersystems MRS sind über ein Busleitungssystem BS — im folgenden auch Transferbus genannt — miteinander verbunden. Die Abwicklung der eingangs genannten Funktionen (Kommunikation, Betrieb, Diagnose und Wartung) wird von dem Betriebsrechner BR durchgeführt. Der Transferbus ist dafür die physikalische Grundlage. In dem gezeigten Ausführungsbeispiel sind bis zu 16 Arbeitsrechner AR, nämlich $AR_0 ... AR_{15}$, angeschlossen. Diese Zahl kann jedoch erhöht werden, wenn die Adreßleitungen für « Senderechner » und « Empfangsrechner » erweitert werden und die Identifikation der Arbeitsrechner AR codiert wird.

Der Betriebsrechner BR ist an den Transferbus mit einer Bussteuerung BSST, die Arbeitsrechner $AR_0 ... AR_{15}$ sind jeweils mit einer ihnen individuell zugeordneten Busanpassung BSA angeschlossen. Die Begriffe « Senderechner » bzw. « Empfangsrechner » beschreiben im folgenden den jeweiligen Betriebszustand der Rechner während einer Kommunikation zwischen diesen Rechnern. Die Kommunikation der einzelnen Rechnern erfolgt jeweils über ein Kommunikationsfeld KF in jedem Arbeitsrechner AR. Das Kommunikationsfeld KF ist ein definierter Bereich im Schreib-/Lesespeicher, der die für den Datentransfer erforderlichen Versorgungsparameter enthält. Der Betriebsrechner BR kennt die Anfangsadressen der Kommunikationsfelder KF in den Arbeitsrechner AR.

Der Betriebsrechner BR hat neben der an sich bekannten zentralen Funktion einer Wartung bzw. Diagnose des gesamten Mehrrechnersystems MRS auch eine zentrale Funktion, die die Steuerung der Kommunikation zwischen den Rechnern, nämlich den Arbeitsrechnern AR, betrifft. Das Busleitungssystem BS has außer der an sich für ein derartiges Busleitungssystem BS bekannten Adreßleitung ADRS/ADRE, einer Datenleitung DAT und einer Bussteuerleitung BUST weitere Leitungen, nämlich eine Transfersteuerleitung TRST, eine Adreßgebersteuerleitung AGST und einer Zugriffssignalleitung SPEA. Der Betriebsrechner BR führt zur Durchführung der Kommunikation ein Liste, die er u. B. auch dazu verwendet, eine von einem Rechner, z. B. $AR_0$, nicht lösbare Aufgabe einem anderen Rechner, z. B. $AR_{15}$, zu übertragen.

Die Liste enthält eine Information darüber, welche Aufgabe oder welche Aufgaben von welchem Rechner oder welchen Arbeitsrechnern AR gelöst werden kann bzw. gelöst werden können. In der Liste ist außerdem eine Information enthalten, die Auskunft über den jeweiligen Frei-/Besetztzustand jedes der Arbeitsrechner AR gibt. Der jeweilige Frei-/Besetztzustand jedes der Arbeitsrechner AR wird jeweils bei Bedarf durch den Betriebsrechner BR abgefragt. Außerdem enthält die Liste eine Information zur Umwertung der Kennung eines Arbeitsrechners AR in dessen Adresse und außerdem eine Information über die Anfangsadresse des Kommunikationsfeldes KF des betreffenden Arbeitsrechners AR.

Das Kommunikationsfeld KF kann einen beliebigen Aufbau haben. Es weist vorzugsweise ein vorbestimmtes, festes Format auf. In dem Kommunikationsfeld KF ist u. a. eine Angabe darüber enthalten, wie lang das zu transferierende Datenfeld ist.

Der Betriebsrechner BR liest bei einer Anforderung durch einen Arbeitsrechner AR aufgrund der Information der Liste den Inhalt des Kommunikationsfeldes KF des betreffenden anfordernden Arbeitsrechners AR ein und trifft anschließend aufgrund der Information der Liste und der Information des betreffenden Kommunikationsfeldes KF eine Entscheidung darüber, ob die der Anfrage zugrundeliegende Aufgabe unmittelbar an einen weiteren Arbeitsrechner AR übertragen werden kann oder ob die betreffenden Daten zwischengespeichert werden müssen. Die Entscheidung darüber, ob die betreffende Aufgabe unmittelbar an einen diese Aufgabe betreffenden Arbeitsrechner AR übertragen wird oder ob die betreffenden Daten in dem Betriebsrechner BR zwischengespeichert werden, wird von der Art der Aufgabe abhängig gemacht. Diese Entscheidung kann auch von dem Anwendungsfall für das gesamte Mehrrechnersystem MRS abhängig gemacht werden. Sie kann erfindungsgemäß auch von dem Prioritätsrang der betreffenden Aufgabe abhängig gemacht werden. Schließlich kann die Entscheidung darüber, ob die betreffende Aufgabe unmittelbar auf den diese Aufgabe betreffenden Arbeitsrechner AR übertragen werden soll oder ob die betreffenden Daten in dem Betriebsrechner BR zwischengespeichert werden sollen, gemäß einer Weiterbildung der Erfindung auch davon abhängig gemacht werden, ob bereits Daten für zuvor gemeldete Aufgaben zwischengespeichert sind und ob noch Speicherplatz zur Verfügung steht, um die betreffende Aufgabe noch durch den Betriebsrechner BR annehmen zu können.

Eine andere Weiterbildung der Erfindung sieht vor, daß eine bereits bestehende Prioritätenfolge für die Aufgabenverteilung durch eine neu auftretende Aufgabe aufgrund des Prioritätsranges dieser Aufgabe innerhalb des Betriebsrechners BR geändert wird.

Wie Fig. 1 zeigt, ist die Adreßleitung ADRS/ADRE in eine Senderechner-Adreßleitung ADRS und eine Empfangsrechner-Adreßleitung ADRE unterteilt, über welche Adreßleitungen die jeweils an einer Kommunikation bzw. einem Datentransfer beteiligten Rechner aufrufbar sind.

Über die Transfersteuerleitung TRST wird die jeweilige Betriebsbereitschaft eines als Senderechner arbeitenden Arbeitsrechners, z. B. $AR_0$, und eines als Empfangsrechner arbeitenden Arbeitsrechners, z. B. $AR_{15}$, gleichzeitig abgefragt. Außerdem kann über die Transfersteuerleitung TRST ein Interrupt-Signal von dem Betriebsrechner BR zu einem Arbeitsrechner AR oder umgekehrt übertragen werden. Die Adreßgebersteuerleitung AGST ist dafür vorgesehen, ein Umschalt-Signal beim Laden eines Adreßgebers AG innerhalb des Arbeitsrechners AR zu diesem Arbeitsrechner AR zu übertragen. Der Adreßgeber AG wird während eines Datentransfers inkrementiert. Über die Zugriffssignalleitung SPEA werden Zugriffsignale zum Zwecke eines freizügigen Zugriffs zu dem Speicher eines beliebigen Arbeitsrechners AR übertragen.

Vorteilhafterweise ist vorgesehen, daß jeweils für den Datentransfer zwischen zwei Arbeitsrechnern, z. B. $AR_0$ und $AR_{15}$, von einem Quittungssignal für ein gesendetes Anreizsignal ein folgendes Anreizsignal abgeleitet wird. Durch dieses als « Ablaufsteuerung » bekannte Verfahren ist ein vorteilhafter Zeitgewinn zu erreichen, da zeitliche Toleranzen — wie bei starren Taktverfahren notwendig — nicht berücksichtigt werden müssen.

Es ist ebenfalls vorgesehen, daß bei dem Datentransfer die beiden jeweils betreffenden Speicher gleichzeitig angesteuert werden, wobei aus dem einen der beiden Speicher Daten gelesen und diese Daten in den anderen Speicher geschrieben werden, wozu aus dem Quittungssignal auf das Lesesignal ein Schreibsignal abgeleitet wird.

Der Betriebsrechner BR hat mittels eines Betriebsartensignals in unterschiedlicher Weise einen unmittelbaren Zugriff zu dem Speicher eines Arbeitsrechners, z. B. $AR_0$, zum Lesen bzw. Schreiben, wobei der Betriebsrechner BR die Bedingungen des internen Bus der betreffenden Arbeitsrechner, z. B. $AR_0$, erfüllt. Gemäß einer Weiterbildung der Erfindung ist vorgesehen, daß der Betriebsrechner BR den Speicher des betreffenden Arbeitsrechners, z. B. $AR_0$, mit einem oder mehreren Befehlszyklen auf die gleiche Weise anspricht, wie der Betriebsrechner BR seinen eigenen Speicher anspricht. Als Variante kann auch vorgesehen sein, daß der Betriebsrechner BR nicht mit einem order mehreren Befehlszyklen, sondern mit einem oder mehreren Direkt-Speicher-Zugriffen (DMA-Zyklen) den Speicher des betreffenden Arbeitsrechners, z. B. $AR_0$, anspricht. Der Speicher des Betriebsrechners BR kann vorteilhafterweise während eines Datentransfers zwischen zwei Arbeitsrechnern, z. B. $AR_0$ und $AR_{15}$, alle Daten parallel zu dem Speicher des betreffenden empfangenden Arbeitsrechners, z. B. $AR_{15}$, zum Zwecke einer Datensicherung aufnehmen.

Erfindungsgemäß ist vorgesehen, daß alle Arbeitsrechner $AR_0$ ... $AR_{15}$ zeitlich unabhängig ein Anforderungssignal zum Zwecke eines Datentransfers an den Betriebsrechner BR senden können, ohne daß der Betriebsablauf beeinträchtigt wird.

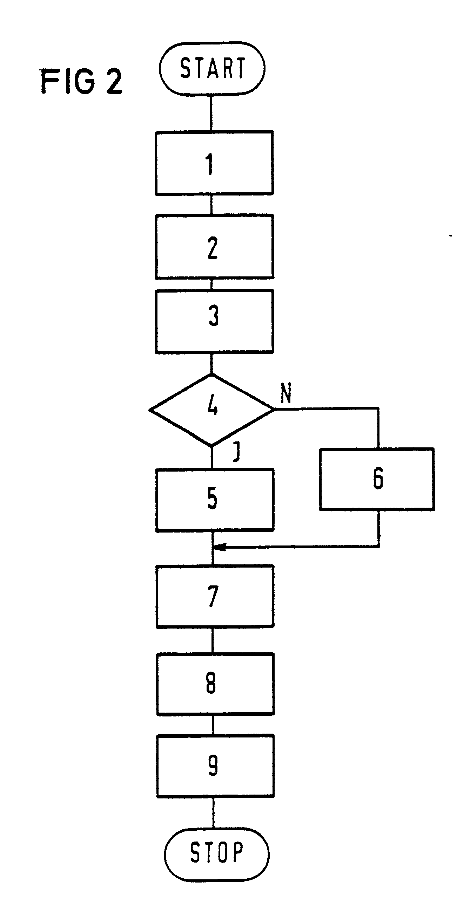

Wie bereits erläutert, zeigt Fig. 2 ein Flußdiagramm für einen Datentransfer bzw. einen Kommunikationszyklus zwischen zwei Rechnern. Bei « START » sendet der betreffende Arbeitsrechner AR ein Interrupt-Signal an den Betriebsrechner BR. Bei « 1 » ruft der Betriebsrechner BR den Inhalt des Kommunikationsfeldes KF ab und sichert das Kommunikationsfeld KF gegen eine Veränderung des Inhaltes. Bei « 2 » ermittelt der Betriebsrechner BR den die Aufgabe betreffenden Empfangsrechner. Der Betriebsrechner liest bei « 3 » den Inhalt des Kommunikationsfeldes KF dieses Empfangsrechners und sichert dieses Kommunikationsfeld KF gegen eine Veränderung seines Inhaltes. Bei der Entscheidungsraute « 4 »

prüft der Betriebsrechner BR anschließend, ob der Transferauftrag unter den bestehenden Umständen durchführbar ist. Wenn der Transferauftrag durchführbar ist (Ausgang « J » von « 4 »), führt der Betriebsrechner BR bei « 5 » den Datentransfer mittels eines Direkt-Speicher-Zugriffs (DMA) durch und sendet ein entsprechendes Quittungssignal jeweils in das Kommunikationsfeld KF des Senderechners und des Empfangsrechners. Anschließend wird bei « 7 » durch den Betriebsrechner BR ein Interrupt-Signal sowohl an den Senderechner als auch an den Empfangsrechner gegeben. Dieser Vorgang setzt sofort auch dann ein, wenn bei der Entscheidungsraute « 4 » entschieden wurde, daß der Transferauftrag nicht durchführbar ist (Ausgang « N »). In diesem Falle schreibt der Betriebsrechner BR eine Meldung als Quittung in das Kommunikationsfeld KF des Senderechners, wahlweise auch in das Kommunikationsfeld KF des Empfangsrechners, und sendet anschließend bei « 7 » das Interrupt-Signal an den Senderechner und den Empfangsrechner, wie zuvor beschrieben.

Nachdem das Interrupt-Signal durch den Betriebsrechner BR abgegeben worden ist, bewerten sowohl der Senderechner als auch der Empfangsrechner bei « 8 » die jeweils empfangenen Quittungen und setzen die jeweils zuvor eingetretene Sperre in ihrem Kommunikationsfeld KF zurück. Der Betriebsrechner wartet bei « 9 » auf eine Quittung des Senderechners und des Empfangsrechners als Signal für das eingetretene Aktivieren bei diesen Rechnern ab. Wenn diese Quittung jeweils eingetroffen ist, beendet der Betriebsrechner BR bei « STOP » den Zyklus.

Der Speicher des Betriebsrechners BR kann vorteilhafterweise auch dazu benutzt werden, Daten von einem Senderechner für den Fall, daß der betreffende Empfangsrechner nicht empfangsbereit ist, vorübergehend zu speichern, um den Senderechner zu entlasten.

Erfindungsgemäß ist auch vorgesehen, daß der Betriebsrechner BR zur Erhöhung der Betriebssicherheit in an sich bekannter Weise gedoppelt ist.

Eine vorteilhafte Realisierung des Mehrrechnersystems MRS ergibt sich dadurch, daß die für die Kommunikation innerhalb des Mehrrechnersystems MRS erforderlichen Transistorfunktionen auf jeweils einem Chip, nämlich einem Chip eines ersten Typs für die Arbeitsrechner AR bzw. eines zweiten Typs für den Betriebsrechner BR angeordnet sind.

Durch die zentrale Funktion des Betriebsrechners BR werden die Arbeitsrechner AR zeitlich entlastet, was in vielen Anwendungsfällen für ein derartiges Mehrrechnersystem MRS vorteilhaft sein kann. Außerdem kann sich eine vorteilhafte Einsparung an Speicherplatz in dem Betriebsrechner BR und eine wesentliche Zeitersparnis durch den erfindungsgemäß vorgesehenen direkten Zugriff des Betriebsrechners BR auf die Speicher der Arbeitsrechner AR ergeben.

**Patentansprüche**

1. Mehrrechnersystem, insbesondere mit einer Vielzahl von Mikrorechnern, bei dem ein alle Rechner verbindendes Busleitungssystem vorgesehen ist und das eine zentrale, an dieses Busleitungssystem angeschlossene Einheit hat, mittels derer alle Rechner betreffende Funktionen ausgeführt werden können, wobei die zentrale Einheit als Betriebsrechner (BR) fungiert, welcher Betriebsrechner (BR) neben der zentralen Funktion einer Wartung bzw. Diagnose des gesamten Mehrrechnersystem (MRS) auch eine zentrale Funktion erfüllt, die die Steuerung einer Kommunikation zwischen den Rechnern, nämlich Arbeitsrechnern (AR), betrifft, und wobei der Betriebsrechner (BR) zur Durchführung der Kommunikation eine Liste führt, die der Betriebsrechner (BR) unter anderem auch dazu verwendet, eine von einem Rechner (z. B. $AR_0$) nicht lösbare Aufgabe einem anderen Rechner (z. B. $AR_{15}$) zu übertragen, dadurch gekennzeichnet, daß das Busleitungssystem (BS) außer der an sich für ein derartiges Busleitungssystem (BS) bekannten Andreßleitung (ADRS/ADRE), einer Datenleitung (DAT) und einer Bussteuerleitung (BUST) weitere Leitungen, nämlich eine Transfersteuerleitung (TRST), über die die jeweilige Betriebsbereitschaft eines als Senderechner arbeitenden Arbeitsrechner (z. B. $AR_0$) und eines als Empfangsrechner arbeitenden Arbeitsrechners (z. B. $AR_{15}$) gleichzeitig abgefragt wird, eine Adreßgebersteuerleitung (AGST), die dafür vorgesehen ist, ein Umschalt-Signal beim Laden eines Adreßgebers (AG) innerhalb des Arbeitsrechners (AR) zu diesem Arbeitsrechner (AR) zu übertragen, und eine Zugriffssignalleitung (SPEA) hat, über die Zugriffssignale zum Zwecke eines freizügigen Zugriffs zu dem Speicher eines beliebigen Arbeitsrechners (AR) übertragen werden, daß die Rechner ($AR_0 ... AR_{15}$) jeweils ein Kommunikationsfeld (KF) haben, in dem u. a. eine Angabe darüber enthalten ist, wie lang ein zu transferierendes Datenfeld ist, daß die Liste Information darüber enthält, welche Aufgabe oder welche Aufgaben von welchem Rechner oder welchen Arbeitsrechnern (AR) gelöst werden kann bzw. können, und daß in der Liste Information enthalten ist, die Auskunft über den jeweiligen Frei-/Besetztzustand jedes der Arbeitsrechner (AR) gibt.

2. Mehrrechnersystem nach Anspruch 1, dadurch gekennzeichnet, daß der jeweilige Frei-/Besetztzustand jedes der Arbeitsrechner (AR) jeweils bei Bedarf durch den Betriebsrechner (BR) abgefragt wird.

3. Mehrrechnersystem nach Anspruch 1, dadurch gekennzeichnet, daß die Liste eine Information zur Umwertung der Kennung eines Arbeitsrechners (AR) in dessen Adresse und außerdem eine Information über die Anfangsadresse des Kommunikationsfeldes (KF) des betreffenden Arbeitsrechners (AR) enthält.

4. Mehrrechnersystem nach Anspruch 1 oder 3, dadurch gekennzeichnet, daß das Kommunikationsfeld (KF) einen beliebigen Aufbau haben kann und daß das Kommunikationsfeld (KF) ein vorbestimmtes, festes Format aufweist.

5. Mehrrechnersystem nach Anspruch 1 oder 4, dadurch gekennzeichnet, daß in dem Kommunikationsfeld (KF) unter anderem eine Angabe darüber enthalten ist, wie lang das zu transferierende Datenfeld ist.

6. Mehrrechnersystem nach Anspruch 1 oder 3, dadurch gekennzeichnet, daß der Betriebsrechner (BR) bei einer Anforderung durch einen Arbeitsrechner (AR) aufgrund der Information der Liste das Kommunikationsfeld (KF) des betreffenden anfordernden Arbeitsrechners (AR) einliest und anschließend aufgrund der Information der Liste und der Information des betreffenden Kommunikationsfeldes (KF) eine Entscheidung darüber trifft, ob die der Anfrage zugrundeliegende Aufgabe unmittelbar an einen weiteren Arbeitsrechner (AR) übertragen werden kann oder ob die betreffenden Daten zwischengespeichert werden müssen.

7. Mehrrechnersystem nach Anspruch 6, dadurch gekennzeichnet, daß die Entscheidung darüber, ob die betreffende Aufgabe unmittelbar an einen diese Aufgabe betreffenden Arbeitsrechner (AR) übertragen wird oder ob die betreffenden Daten in dem Betriebsrechner (BR) zwischengespeichert werden, von der Art der Aufgabe abhängig gemacht wird.

8. Mehrrechnersystem nach Anspruch 6, dadurch gekennzeichnet, daß die Entscheidung darüber, ob die betreffende Aufgabe unmittelbar an einen diese Aufgabe betreffenden Arbeitsrechner (AR) übertragen wird oder ob die betreffenden Daten in dem Betriebsrechner (BR) zwischengespeichert werden, von dem Anwendungsfall für das gesamte Mehrrechnersystem (MRS) abhängig gemacht wird.

9. Mehrrechnersystem nach Anspruch 6, dadurch gekennzeichnet, daß die Entscheidung darüber, ob die betreffende Aufgabe unmittelbar auf den diese Aufgabe betreffenden Arbeitsrechner (AR) übertragen werden soll oder ob die betreffenden Daten in dem Betriebsrechner (BR) zwischengespeichert werden sollen, von dem Prioritätsrang der betreffenden Aufgabe abhängig gemacht wird.

10. Mehrrechnersystem nach Anspruch 6, dadurch gekennzeichnet, daß die Entscheidung darüber, ob die betreffende Aufgabe unmittelbar auf den diese Aufgabe betreffenden Arbeitsrechner (AR) übertragen werden soll oder ob die betreffenden Daten in dem Betriebsrechner (BR) zwischengespeichert werden sollen, davon abhängig gemacht wird, ob bereits Daten für zuvor gemeldete Aufgabe zwischengespeichert sind und ob noch Speicherplatz zur Verfügung steht, um die betreffende Aufgabe noch durch den Betriebsrechner (BR) annehmen zu können.

11. Mehrrechnersystem nach Anspruch 6, dadurch gekennzeichnet, daß eine bereits bestehende Prioritätenfolge für die Aufgabenverteilung durch eine neu auftretende Aufgabe aufgrund des Prioritätsranges dieser Aufgabe innerhalb des Betriebsrechners (BR) geändert wird.

12. Mehrrechnersystem nach Anspruch 1, dadurch gekennzeichnet, daß die Adreßleitung (ADRS/ADRE) in eine Senderechner-Adreßleitung (ADRS) und eine Empfangsrechner-Adreßleitung (ADRE) unterteilt ist.

13. Mehrrechnersystem nach Anspruch 1, dadurch gekennzeichnet, daß über die Transfersteuerleitung (TRST) ein Interrupt-Signal von dem Betriebsrechner (BR) zu einem Arbeitsrechner (AR) oder umgekehrt übertragen werden kann.

14. Mehrrechnersystem nach Anspruch 1, dadurch gekennzeichnet, daß der Adreßgeber (AG) während eines Datentransfers inkrementiert wird.

15. Mehrrechnersystem nach Anspruch 14, dadurch gekennzeichnet, daß jeweils für den Datentransfer zwischen zwei Arbeitsrechnern (z. B. $AR_0$, $AR_{15}$) von einem Quittungssignal für ein gesendetes Anreizsignal ein folgendes Anreizsignal abgeleitet wird.

16. Mehrrechnersystem nach den Ansprüchen 14 and 15, dadurch gekennzeichnet, daß bei dem Datentransfer die beiden jeweils betreffenden Speicher gleichzeitig angesteuert werden, wobei aus dem einen der beiden Speicher Daten gelesen und diese Daten in den anderen Speicher geschrieben werden, wozu aus dem Quittungssignal auf das Lesesignal ein Schreibsignal abgeleitet wird.

17. Mehrrechnersystem nach Anspruch 1, dadurch gekennzeichnet, daß der Betriebsrechner (BR) mittels eines Betriebsartensignals in unterschiedlicher Weise einen unmittelbaren Zugriff zu dem Speicher eines Arbeitsrechners (z. B. $AR_0$) zum Lesen bzw. Schreiben hat, wobei der Betriebsrechner (BR) die Bedingungen des internen Bus der betreffenden Arbeitsrechners (z. B. $AR_0$) erfüllt.

18. Mehrrechnersystem nach Anspruch 17, dadurch gekennzeichnet, daß der Betriebsrechner (BR) den Speicher des betreffenden Arbeitsrechners (z. B. $AR_0$) mit einem oder mehreren Befehlszyklen auf die gleiche Weise anspricht, wie der Betriebsrechner (BR) seinen eigenen Speicher anspricht.

19. Mehrrechnersystem nach Anspruch 17, dadurch gekennzeichnet, daß der Betriebsrechner (BR) nicht mit einem oder mehreren Befehlszyklen, sondern mit einem oder mehreren Direkt-Speicher-Zugriffen (DMA-Zyklen) den Speicher des betreffenden Arbeitsrechners (z. B. $AR_0$) anspricht.

20. Mehrrechnersystem nach Anspruch 1, dadurch gekennzeichnet, daß der Speicher des Betriebsrechners (BR) während eines Datentransfers zwischen zwei Arbeitsrechnern (z. B. $AR_0$, $AR_{15}$) alle Daten parallel zu dem Speicher des betreffenden empfangenden Arbeitsrechners (z. B. $AR_{15}$) zum Zwecke einer Datensicherung aufnimmt.

21. Mehrrechnersystem nach Anspruch 6, dadurch gekennzeichnet, daß alle Arbeitsrechner ($AR_0$ ... $AR_{15}$) zeitlich unabhängig ein Anforderungssignal zum Zwecke eines Datentransfers an den Betriebsrechner (BR) senden können, ohne daß der Betriebsablauf beeinträchtigt wird.

22. Mehrrechnersystem nach den vorhergehenden Ansprüchen, dadurch gekennzeichnet, daß der Betriebsrechner (BR) zur Erhöhung der Betriebssicherheit in an sich bekannter Weise gedoppelt ist.

23. Mehrrechnersystem nach einem der Ansprüche 1-21, dadurch gekennzeichnet, daß die für die Kommunikation innerhalb des Mehrrechnersystems (MRS) erforderlichen Transistorfunktionen auf jeweils einem Chip, nämlich einem Chip eines ersten Typs für die Arbeitsrechner (AR) bzw. eines zweiten Typs für den Betriebsrechner (BR) angeordnet sind.

**Claims**

1. A multi-computer system, in particular comprising a plurality of microcomputers, in which a bus line system is provided which connects all the computers, and which includes a central unit which is connected to this bus line system and by means of which functions relating to all the computers can be executed, where the central unit functions as an operational computer (BR), which operational computer (BR) fulfills, in addition to the central function of servicing and diagnosis of the overall multi-computer system (MRS), also a central function which relates to the control of communication between the computers, namely the working computers (AR), and where the operational computer (BR), to execute the communication, keeps a list which the operational computer (BR) also uses, for example, to transfer a function, which cannot be fulfilled by one computer (e.g. $AR_0$), to another computer (e. g. $AR_{15}$), characterised in that the bus line system (BS) comprises, in addition to the address line (ADRS/ADRE) which is known per se in respect of a bus line system (BS) of this kind, a data line (DAT) and a bus control line (BUST), also further lines, namely a transfer control line (TRST) via which the respective ready status of a working computer operating as transmitting computer (e. g. $AR_0$) and a working computer operating as receiving computer (e. g. $AR_{15}$) are simultaneously interrogated, an address generator control line (AGST) which is provided in order to transmit a switch-over signal to the working computer (AR) when an address generator (AG) within this working computer (AR) is being loaded, and an access signal line (SPEA) via which access signals are transmitted for free access to the store of an arbitrary working computer (AR), that the computers ($AR_0 ... AR_{15}$) each include a communications array (KF), the contents of which include a statement relating to the length of a data array which is to be transferred, that the list contains information as to which function (S) can be fulfilled by which computer or by which working computers (AR), and that the list contains an item of information relating to the respective free/busy status of each of the working computers (AR).

2. A multi-computer system as claimed in claim 1, characterised in that the respective free/busy status of each of the working computers (AR) is called up as and when required by the operational computer (BR).

3. A multi-computer system as claimed in claim 1, characterised in that the list contains an item of information for converting the code of a working computer (AR) into its address and also contains an item of information relating to the start address of the communications array (KF) of the respective working computer (AR).

4. A multi-computer system as claimed in claim 1 or claim 3, characterised in that the communications array (KF) can have an arbitrary construction and that the communications array (KF) has a predetermined, fixed format.

5. A multi-computer system as claimed in claim 1 or claim 4, characterised in that the contents of the communications array (KF) include a statement relating to the length of the data array which is to be transferred.

6. A multi-computer system as claimed in claim 1 or claim 3, characterised in that in the event of a request by a working computer (AR) on the basis of the information of the list, the operational computer (BR) inputs the communications array (KF) of the respective requesting working computer (AR) and then, on the basis of the information of the list and the information of the respective communications array (KF), makes a decision as to whether the function on which the request is based can be transferred directly to a further working computer (AR) or whether the respective data must be intermediately stored.

7. A multi-computer system as claimed in claim 6, characterised in that the decision as to whether the respective function is transferred directly to a working computer (AR) relating to this function or whether the respective data is intermediately stored in the operational computer (BR) is rendered dependent upon the type of function.

8. A multi-computer system as claimed in claim 6, characterised in that the decision as to whether the respective function is transferred directly to a working computer (AR) relating to this function or whether the respective data is intermediately stored in the operational computer (BR) is rendered dependent upon the application of the overall multi-computer system (MRS).

9. A multi-computer system as claimed in claim 6, characterised in that the decision as to whether the respective function is transferred directly to the working computer (AR) relating to this function or whether the respective data is to be intermediately stored in the operational computer (BR) is rendered dependent upon the priority rating of the respective function.

10. A multi-computer system as claimed in claim 6, characterised in that the decision as to whether the respective function is transferred directly to the working computer (AR) relating to this function or whether the respective data is to be intermediately stored in the operational computer (BR) is rendered dependent upon whether data for previously-logged functions is already intermediately stored and whether storage space is still available in order that the respective function may still be accommodated by the operational computer (BR).

11. A multi-computer system as claimed in claim 6, characterised in that an already-existing priority sequence for the function distribution is updated by a newly-occurring function on the basis of the priority rating of this function within the operational computer (BR).

12. A multi-computer system as claimed in claim 1, characterised in that the address line (ADRS/ADRE) is sub-divided into a transmitting computer address line (ADRS) and a receiving computer address line (ADRE).

13. A multi-computer system as claimed in claim 1, characterised in that via the transfer control line (TRST) an interrupt signal can be transmitted from the operational computer (BR) to a working computer (AR) or vice versa.

14. A multi-computer system as claimed in claim 1, characterised in that the address generator (AG) is incremented during a data transfer.

15. A multi-computer system as claimed in claim 14, characterised in that for each data transfer between two working computers (e. g. $AR_0$, $AR_{15}$), from an acknowledgement signal for a transmitted activation signal there is derived a following activation signal.

16. A multi-computer system as claimed in claim 14 and claim 15, characterised in that during the data transfer the two respective stores are driven simultaneously, whereby data is read from one of the two stores and this data is input into the other store, for which purpose a write signal is derived from the acknowledgement signal of the read signal.

17. A multi-computer system as claimed in claim 1, characterised in that by means of an operating mode signal the operational computer (BR) gains direct access in different ways to the store of a working computer (e. g. $AR_0$) for read or write purposes, where the operational computer (BR) fulfills the conditions of the internal bus of the respective working computer ($AR_0$).

18. A multi-computer system as claimed in claim 17, characterised in that the operational computer (BR) approaches the store of the respective working computer (e. g. $AR_0$) with one or a plurality of command cycles in the same way as the operational computer (BR) approaches its own store.

19. A multi-computer system as claimed in claim 17, characterised in that the operational computer (BR) approaches the store of the respective working computer (e. g. $AR_0$) not with one or a plurality of command cycles but with one or a plurality of direct store accesses (DMA) cycles.

20. A multi-computer system as claimed in claim 1, characterised in that during a data transfer between two working computers (e. g. $AR_0$, $AR_{15}$) the store of the operational computer (BR) accommodates all the data in parallel with the store of the respective receiving working computer (e. g. $AR_{15}$) for the purpose of data safeguarding.

21. A multi-computer system as claimed in claim 6, characterised in that all the working computers ($AR_0 ... AR_{15}$) can transmit a request signal for the purpose of a data transfer to the operational computer (BR) at independent times without impairing the operating flow.

22. A multi-computer system as claimed in the preceding claims, characterised in that the operational computer (BR) is provided in duplicate in a manner known per se in order to increase the operating reliability.

23. A multi-computer system as claimed in one of the claims 1 to 21,, characterised in that the transistor functions required for communication within the multi-computer system (MRS) are arranged on a respective chip, namely a chip of a first type for the working computers (AR) and of a second type for the operational computer (BR).

## Revendications

1. Système à multiordinateurs, comportant notamment une multiplicité de micro-ordinateurs et dans lequel il est prévu un système de lignes formant bus reliant tous les ordinateurs et une unité centrale raccordée à ce système de lignes formant bus et à l'aide de laquelle toutes les fonctions concernant les ordinateurs peuvent être exécutées, et dans lequel l'unité centrale fonctionne en tant qu'ordinateur de service (BR), qui assume, en dehors de la fonction centrale de maintenance ou de diagnostic de l'ensemble du système à multiordinateurs (MRS), également une fonction centrale concernant la commande d'une communication entre les ordinateurs, à savoir les ordinateurs de travail (AR), et dans lequel l'ordinateur de service (BR) établit, pour l'exécution de la communication, une liste que cet ordinateur de service (BR) utilise notamment également pour transférer une tâche, qui ne peut pas être résolue par un ordinateur (par exemple $AR_0$), à un autre ordinateur (par exemple $AR_{15}$), caractérisé en ce que le système (BS) de lignes formant bus contient, en dehors de la ligne d'adressage (ADRS/ADRE) connue pour un tel système (BS) de lignes formant bus, d'une ligne (DAT) de transmission de données et d'une ligne (BUST) de commande de bus, d'autres lignes, à savoir une ligne de commande de transfert (TRST), au moyen de laquelle un ordinateur de travail (par exemple $AR_0$) opère en tant qu'ordinateur d'émission, et un ordinateur de travail (par exemple $AR_{15}$) opérant en tant qu'ordinateur de réception sont interrogés du point de vue de la disponibilité respective de fonctionnement, d'une ligne (AGST) de commande d'un générateur d'adresses, qui est prévue pour transmettre un signal de commutation, lors du chargement d'un générateur d'adresses (AG) à l'intérieur de l'ordinateur de travail (AR), à cet ordinateur de travail (AR), et une ligne (SPEA) de transmission de signaux d'accès, par l'intermédiaire de laquelle les signaux d'accès sont transmis pour l'obtention d'un accès libre à la mémoire de n'importe quel ordinateur de travail (AR), que les ordinateurs (AR$_0$ ... AR$_{15}$) possèdent chacun une zone respective de communication (KF), qui contient notamment une indication concernant la longueur d'une zone de données devant être transférée, que la liste contient une information sur la ou les tâches que peut ou peuvent exécuter un ou plusieurs ordinateurs de travail (AR), et que la liste contient une information fournissant une indication sur l'état respectif libre/occupé de chacun des ordinateurs de travail (AR).

2. Système à multiordinateurs suivant la revendication 1, caractérisé par le fait que l'ordinateur de service (BR) interroge le cas échéant chacun des ordinateurs de travail (AR) pour connaître son état libre/occupé respectif.

3. Système à multiordinateurs suivant la revendication 1, caractérisé par le fait que la liste contient une information utilisée pour la conversion de l'indicatif d'un ordinateur de travail (AR) dans l'adresse de ce dernier, et en outre une information concernant l'adresse de départ de la zone de communication (KF) de l'ordinateur de travail (AR) considéré.

4. Système à multiordinateurs suivant la revendication 1 ou 3, caractérisé par le fait que la zone de communication (KS) peut posséder n'importe quelle structure et possède un format fixe prédéterminé.

5. Système à multiordinateurs suivant la revendication 1 ou 4, caractérisé par le fait que la zone de communication (KS) contient notamment une indication sur la longueur de la zone de données devant être transférée.

6. Système à multiordinateurs suivant la revendication 1 ou 3, caractérisé par le fait que dans le cas d'une demande présentée par un ordinateur de travail (AR), l'ordinateur de service (BR) lit, sur la base de l'information de la liste, la zone de communication (KF) de l'ordinateur de travail considéré (AR) exécutant la demande et prend ensuite, sur la base de l'information de la liste et de l'information de la zone considérée de communication (KS), une décision quant au fait que la tâche, qui est à la base de la demande, peut être transférée directement à un autre ordinateur de travail (AR) ou bien que les données considérées doivent être mémorisées temporairement.

7. Système à multiordinateurs suivant la revendication 6, caractérisé par le fait que la décision quant au fait que la tâche considérée est transférée directement à un ordinateur de travail (AR) traitant cette tâche ou bien que les données considérées sont mémorisées temporairement dans l'ordinateur de service (BR), est rendue dépendante du type de la tâche.

8. Système à multiordinateurs suivant la revendication 6, caractérisé par le fait que la décision concernant le fait que la tâche considérée est transférée directement à un ordinateur de travail (AR) traitant cette tâche ou que les données considérées sont mémorisées temporairement dans l'ordinateur de service (BR), est rendue dépendante du cas d'utilisation pour l'ensemble du système à multiordinateurs (MRS).

9. Système à multiordinateurs selon la revendication 6, caractérisé par le fait que la décision concernant le fait que la tâche considérée est transférée directement à l'ordinateur de travail (AR) traitant cette tâche ou que les données considérées doivent être mémorisées temporairement dans l'ordinateur de service (BR), est rendue dépendante du rang de priorité de la tâche considérée.

10. Système à multiordinateurs suivant la revendication 6, caractérisé par le fait que la décision concernant le fait que la décision concernant le fait que la tâche considérée doit être transférée directement à l'ordinateur de travail (AR) traitant cette tâche ou que les données considérées doivent être mémorisées temporairement dans l'ordinateur de service (BR), est rendue dépendante du fait que des données pour la tâche signalée auparavant sont déjà mémorisées temporairement et qu'une place de mémoire est encore disponible pour que l'ordinateur de service (BR) puisse encore accepter la tâche considérée.

11. Système à multiordinateurs suivant la revendication 6, caractérisé par le fait qu'une suite déjà existante de priorités pour la distribution des tâches est modifiée par une nouvelle tâche arrivante, sur la base du rang de priorité de cette tâche, à l'intérieur de l'ordinateur de service (BR).

12. Système à multiordinateurs suivant la revendication 1, caractérisé par le fait que la ligne (ADRS-ADRE) de transmission d'adresses est subdivisée en une ligne (ADRS) de transmission d'adresses de l'ordinateur d'émission et en une ligne (ADRE) de transmission d'adresses de l'ordinateur de réception.

13. Système à multiordinateurs suivant la revendication 1, caractérisé par le fait qu'un signal d'interruption peut être transmis par l'intermédiaire de la ligne (TRST) de commande de transfert depuis l'ordinateur de service (BR) à un ordinateur de travail (AR) ou inversement.

14. Système à multiordinateurs suivant la revendication 1, caractérisé par le fait que le générateur d'adresses (AG) est incrémenté pendant un transfert de données.

15. Système à multiordinateurs suivant la revendication 14, caractérisé par le fait que, respectivement pour le transfert de données entre deux ordinateurs de travail (par exemple AR$_0$, AR$_{15}$), un signal ultérieur de déclenchement est dérivé d'un signal d'accusé de réception délivré pour un signal de déclenchement émis.

16. Système à multiordinateurs suivant les revendications 14 et 15, caractérisé par le fait que, lors du transfert de données, les deux mémoires considérées sont commandées simultanément, auquel cas les données sont lues à partir de l'une des deux mémoires et sont enregistrées dans l'autre mémoire et à cet effet un signal d'enregistrement est dérivé du signal d'accusé de réception délivré pour un signal de lecture.

17. Système à multiordinateurs suivant la revendication 1, caractérisé par le fait que l'ordinateur de service (BR) a d'une manière variable, au moyen d'un signal de type de fonctionnement, un accès direct à la mémoire d'un ordinateur de travail (par exemple AR$_0$), pour la lecture et l'enregistrement, l'ordinateur de service (BR) satisfaisant aux exigences requises du bus interne de l'ordinateur de travail considéré (par exemple AR$_0$).

18. Système à multiordinateurs suivant la revendication 17, caractérisé par le fait que l'ordinateur de service (BR) répond à la mémoire de l'ordinateur de travail considéré (par exemple AR$_0$) avec un ou plusieurs cycles d'instructions, de la même manière que l'ordinateur de service (BR) répond à sa propre mémoire.

19. Système à multiordinateurs suivant la revendication 17, caractérisé par le fait que l'ordinateur de service (BR) répond à la mémoire de l'ordinateur de travail considéré (par exemple AR$_0$) non pas par un ou plusieurs cycles d'instructions, mais par un ou plusieurs accès directs en mémoire (cycles DMA).

20. Système à multiordinateurs suivant la revendication 1, caractérisé par le fait que pendant un transfert de données entre deux ordinateurs de travail (par exemple AR$_0$, AR$_{15}$), la mémoire de l'ordinateur de service (BR) reçoit toutes les données, en parallèle avec la mémoire de l'ordinateur de travail considéré (par exemple AR$_{15}$) exécutant la réception, de manière à avoir une protection des données.

21. Système à multiordinateurs suivant la revendication 6, caractérisé par le fait que tous les ordinateurs de travail (AR$_0$ ... AR$_{15}$) peuvent envoyer d'une manière indépendante dans le temps, un signal de demande à l'ordinateur de travail (BR), en vue de réaliser un transfert de données, sans que le déroulement du fonctionnement n'en soit affecté.

22. Système à multiordinateurs suivant les revendications précédentes, caractérisé par le fait que l'ordinateur de service (BR) est doublé de façon connue en soi, de sorte que la sécurité de fonctionnement est accrue.

23. Système à multiordinateurs suivant l'une des revendications 1-21, caractérisé par le fait que les fonctions transistors nécessaires pour la communication à l'intérieur du système à multiordinateurs (MRS) sont disposées sur une microplaquette respective, à savoir une microplaquette du premier type pour les ordinateurs de travail (AR) et une microplaquette d'un second type pour l'ordinateur de service (BR).

FIG. 1

FIG 2